# EUROPÄISCHE PATENTSCHRIFT

(11) **EP 2 114 725 B1**
(45) Veröffentlichungstag und Bekanntmachung des Hinweises auf die Patenterteilung: **27.06.2012**
(21) Anmeldenummer: 08707266.6
(22) Anmeldetag: 24.01.2008
(51) Int. Cl.: B60N 2/22, B60N 2/235

(54) **VERSTELLVORRICHTUNG MIT MEMORY-FUNKTION**
ADJUSTING APPARATUS WITH A MEMORY FUNCTION
DISPOSITIF DE RÉGLAGE À FONCTION DE MÉMORISATION

(30) Priorität: 01.02.2007 DE 102007005893
(43) Veröffentlichungstag der Anmeldung: 11.11.2009
(73) Patentinhaber: Johnson Controls GmbH, 51399 Burscheid (DE)
(72) Erfinder: LEE, Glen, 50829 Köln (DE); FAHL, Michael, 51491 Overath (DE); BOUDINOT, Richard, 40625 Düsseldorf (DE); GORCIC, Sascha, 42897 Remscheid (DE)
(74) Vertreter: Wolff, Felix
(86) Internationale Anmeldenummer: PCT/EP2008/000555
(87) Internationale Veröffentlichungsnummer: WO 2008/092601

(56) Entgegenhaltungen:
- DE-C2- 3 816 833
- US-A- 5 435 624

## Beschreibung

Die Erfindung betrifft eine Verstellvorrichtung für ein Fahrzeug mit einem Kupplungsmittel und einer Reclinerachse, wobei die Reclinerachse mit einem Recliner verbunden ist.

Solche Verstellvorrichtungen sind allgemein bekannt. So beschreibt die Druckschrift DE 38 16 833 C2 beispielsweise eine Verstellvorrichtung mit einem ersten Kupplungsteil und einem zweiten Kupplungsteil. Beim Hochziehen eines Auslösehebels wird ein Memoryring und das erste Kupplungsteil von dem zweiten Kupplungsteil entfernt. Nachdem dann ein Exzenterbolzen von einer Antriebswelle abgekuppelt ist, kann die Rückenlehne verschwenkt werden. Nachteilig bei der beschriebenen Verstellvorrichtung ist jedoch, dass zur Entriegelung der Rückenlehne eine Mehrzahl von Mechanismen betätigt werden muss, wodurch der Entriegelungsweg sehr lang wird.

Es war daher die Aufgabe der vorliegenden Erfindung eine Verstellvorrichtung für ein Fahrzeug anzugeben, bei der die Rückenlehne einen sehr kurzen Entriegelungsweg aufweist.

Die Aufgabe wird gelöst durch eine Verstellvorrichtung für ein Fahrzeug mit einem Kupplungsmittel und einer Reclinerachse, wobei die Reclinerachse mit einem Recliner verbunden ist. Bei einer Bewegung des Kupplungsmittels in axialer Richtung wird dabei die Reclinerachse um eine Drehachse gedreht und hierdurch der Recliner entriegelt oder verriegelt. In vorteilhafter Weise bewirkt folglich eine Verschiebung des Kupplungsmittels das Lösen des Recliners, wodurch der Entriegelungsweg vorteilhaft kurz wird.

Bevorzugte Ausführungsformen der Erfindung werden durch die Unteransprüche beschrieben.

Ein weiterer Gegenstand der vorliegenden Erfindung ist ein Verfahren zur Entriegelung eines Recliners durch eine erfindungsgemäße Verstellvorrichtung gemäß des Anspruchs 14.

Noch ein weiterer Gegenstand der vorliegenden Erfindung ist ein Verfahren zur Verriegelung des Recliners durch eine erfindungsgemäße Verstellvorrichtung gemäß des Anspruchs 15.

Die Erfindung wird nachfolgend anhand von Zeichnungen beschrieben, wobei die Beschreibung lediglich beispielhaft ist.
- **Figur 1**: stellt schematisch eine Verstellvorrichtung mit den einzelnen Bauteilen dar.
- **Figur 2**: stellt schematisch die Verstellvorrichtung in einem Querschnitt dar.
- **Figur 3, 4** und **5**: stellen schematisch die Verstellvorrichtung mit unterschiedlichen Positionen der Bauteile zueinander dar.
- **Figur 6**: stellt schematisch einen Bewegungswandler der Verstellvorrichtung dar.
- **Figur 7**: stellt eine Explosionsdarstellung der Verstellvorrichtung dar.

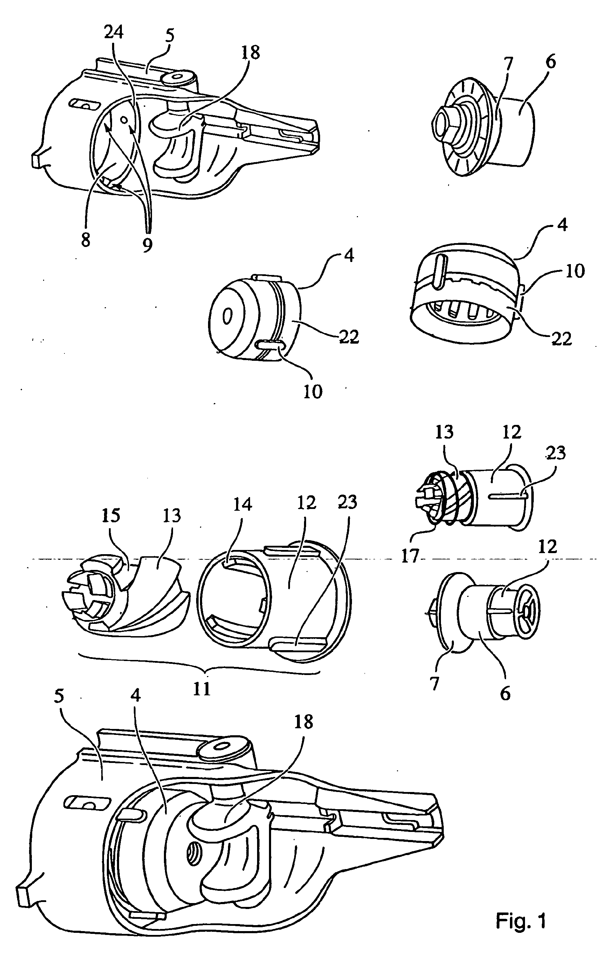

In der Figur 1 sind schematisch verschiedenen Bauteile einer Verstellvorrichtung 1 dargestellt. Eine Verkleidung 5 weist bevorzugt ein Führungselement 8 auf, wobei das Führungselement 8 Ausnehmungen 9 aufweist. Im Ausführungsbeispiel sind drei Ausnehmungen 9 im Führungselement 8 vorgesehen. Es können jedoch auch nur zwei oder mehr als drei Ausnehmungen 9 im Führungselement 8 ausgebildet sein. Das Führungselement 8 weist vorzugsweise einen Rand 24 auf, der von den Ausnehmungen 9 unterbrochen wird. Die Verkleidung 5 ist besonders bevorzugt drehfest mit einer Rückenlehne des Fahrzeugsitzes verbunden. Bei einer Drehung der Rückenlehne um die Drehachse 20 (in Figur 1 nicht dargestellt) dreht sich folglich auch die Verkleidung 5 um die Drehachse 20. In die Verkleidung 5 wird ein Gehäuse 6 eingeführt. Das Gehäuse 6 weist bevorzugt eine Reibfläche 7 auf und ist mittels einer Gabel, die an das Gehäuse 6 angreift, mit einem Sitzteil eines Fahrzeugsitzes drehfest verbunden. Im Ausführungsbeispiel ist die Reibfläche 7 konisch geformt. Ein Kupplungsmittel 4 weist vorzugsweise Verraststege 10 auf. Bevorzugt ist die Anzahl der Verraststege 10 gleich der Anzahl der Ausnehmungen 9 des Führungselements 8. Das Kupplungsmittel 4 weist zudem im Ausführungsbeispiel einen Teilbereich 22 auf. Mit diesem Teilbereich 22 kann das Kupplungsmittel 4 eine reibschlüssige Verbindung mit der Reibfläche 7 des Gehäuses 6 eingehen, der Teilbereich 22 ist daher bevorzugt ebenfalls konisch ausgebildet. Ein Bewegungswandler 11 weist vorzugsweise eine Hülse 12 und einen Kern 13 auf. Der Kern 13 weist vorzugsweise spiralförmige Ausnehmungen 15 auf, die mit Stegen 14 der Hülse 12 eine form- und/oder kraftschlüssige Verbindung eingehen, wenn der Kern 13 zumindest teilweise in die Hülse 12 geschoben wird. Der Kern 13 weist bevorzugt einen Einführungskanal für eine Reclinerachse 21 (in Figur 1 nicht dargestellt) auf, wobei die Reclinerachse 21 form- und/oder kraftschlüssig mit dem Kern 13 verbunden ist, wenn sich die Reclinerachse 21 im Kern 13 befindet. Durch eine Drehung der Reclinerachse 21 ist vorzugsweise der Recliner ver- und entriegelbar. Somit ist in vorteilhafter Weise die Verstellvorrichtung 1 über die Reclinerachse 21 mit dem Recliner verbunden. Nicht in der Figur 1 dargestellt ist ein erstes Federmittel 16, welches vorzugsweise außen um das Kupplungsmittel 4 verläuft. Ein zweites Federmittel 17 wird bevorzugt um den Kern 13 gelegt und ist mit der Hülse 12 über eine Einkerbung 25 (in Figur 1 nicht dargestellt) verbunden. Das zweite Federmittel 17 und der Kern 13 werden vorzugsweise in das Gehäuse 6 eingeführt, wie in der Figur 1 dargestellt. Das Gehäuse 6 weist im inneren Längsausnehmungen auf und die Hülse 12 weist im Ausführungsbeispiel Längsstege 23 auf. Bei einer Verschiebung der Hülse 12 in das Gehäuse 6 werden dabei bevorzugt die Längsstege 23 in die Längsausnehmungen des Gehäuses 6 geschoben. Es entsteht hierbei vorzugsweise eine form- und/oder kraftschlüssige Verbindung zwischen der Hülse 12 und dem Gehäuse 6. In die Verkleidung 5 wird vorzugsweise der Bewegungswandler 11 mit dem zweiten Federmittel 17 und dem Gehäuse 6 eingeführt. Anschließend gelangt das Kupplungsmittel 4 mit dem ersten Federelement 16 in Kontakt mit der Hülse 12. Das Kupplungsmittel 4 wird dabei bevorzugt über die Hülse 12 geschoben. Das erste und das zweite Federmittel 16, 17 sind bevorzugt Spiralfedern und im wesentlichen nicht komprimiert, wenn der Recliner verriegelt ist. An der Verkleidung 5 ist des weiteren ein Hebel 18 befestigt, wobei der Hebel 18 drehbar ist und durch einen Zug 19 (in Figur 1 nicht dargestellt) bewegt werden kann. Wie bereits erwähnt, wird durch die Verstellvorrichtung 1 ein Recliner verriegelt oder entriegelt. Die Rückenlehne kann durch eine Drehung um die Drehachse 20 (in Figur 1 nicht dargestellt) bevorzugt in eine Mehrzahl von Positionen verstellt werden, wobei die möglichen Verstellpositionen von dem Ver- oder Entriegelungszustand des Recliners abhängig sind. Bei einer Verstellung im sogenannten Komfortbereich wird dabei der Recliner bevorzugt nicht entriegelt. Die Rückenlehne wird in einem Komfortbereich verstellt, wenn sie lediglich in einem Winkelbereich von ± 10° um die Drehachse 20 verschwenkt wird. In diesem Fall wird folglich das Kupplungsmittel 4 mit der Rückenlehne zusammen in einem Komfortbereich verdreht. Bei einer Verstellung der Rückenlehne in eine Easy-Entry-Position, eine Tischklappposition oder eine Schlafposition muss bevorzugt der Recliner entriegelt werden, bevor eine Verstellung der Rückenlehne ermöglich wird. Bei einer Easy-Entry Verstellung wird dabei bevorzugt die Rückenlehne in einem Winkel von etwa 45° zum Sitzteil in Richtung Sitzteil um die Drehachse 20 verdreht. Hierdurch wird das Platznehmen auf der Rücksitzbank erleichtert. Bei einer Tischklappfunktion wird bevorzugt die Rückenlehne im wesentlichen waagerecht auf das Sitzteil verschwenkt. Bei einer Schlafposition wird die Rückenlehne von dem Sitzteil weg und im wesentlichen in einer Ebene zum Sitzteil verschwenkt. Da diese Verstellpositionen bevorzugt nur mit einem entriegelten Recliner möglich sind und hierbei das Kupplungsmittel 4 drehfest mit dem Sitzteil verbunden ist, wird bei einer Verstellung der Rückenlehne in eine dieser Positionen das Kupplungsmittel 4 nicht mit der Rückenlehne verdreht. Selbstverständlich sind auch weitere Positionen der Rückenlehne mit entriegelten Recliner möglich.

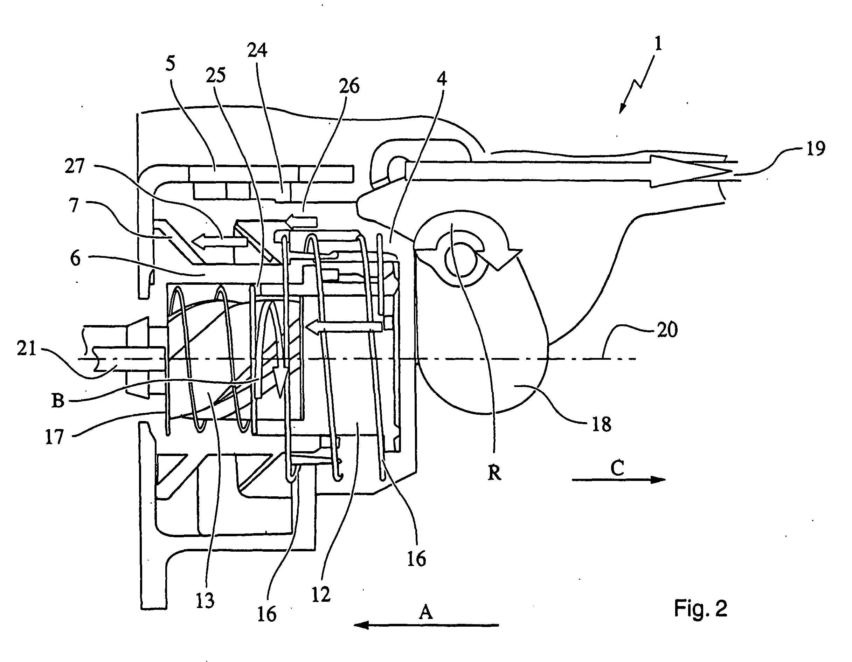

In der Figur 2 ist schematisch die Verstellvorrichtung 1 dargestellt, wobei die Bauteile der Verstellvorrichtung 1 so zueinander positioniert sind, dass der Recliner verriegelt ist. Die Reclinerachse 21 ist form- und/oder kraftschlüssig mit dem Kern 13 verbunden. Das Kupplungsmittel 4 ist mit seinen Verraststegen 10 in den Ausnehmungen 9 des Führungselements 8 und ist daher form- und/oder kraftschlüssig mit diesem verbunden. Da das Führungselement 8 mit der Verkleidung 5 verbunden ist und die Verkleidung 5 wiederum drehfest verbunden ist mit der Rückenlehne, ist das Kupplungsmittel 4 in diesem Fall auch drehfest mit der Rückenlehne verbunden. Der Teilbereich 22 des Kupplungsmittels 4 liegt dann auch nicht an der Reibfläche 7 des Gehäuses 6 an, so dass keine reibschlüssige Verbindung zwischen Gehäuse 6 und Kupplungsmittel 4 entsteht. Wird nun von einem Benutzer der Zug 19, der bevorzugt ein Bowdenzug 19 ist, betätigt, dreht der Hebel 18 bevorzugt in Richtung des dargestellten Pfeils D. Hierdurch wird das Kupplungsmittel 4 bevorzugt in Richtung A verschoben und dabei vorzugsweise das erste Federmittel 16 komprimiert. Da die Hülse 12 in einem form- und/oder kraftschlüssigen Kontakt steht mit dem Kupplungsmittel 4, wird auch die Hülse 12 bevorzugt in Richtung A verschoben, wobei auch das zweite Federmittel 17 komprimiert wird. Das Kupplungsmittel 4 weist zu seinem Teilbereich 22 bevorzugt einen Abstand 26 auf. Durch diesen Abstand 26 ist der Weg 27 bis zur Reibfläche 7 variabel. Je größer der Abstand 26 ist, um so kleiner ist der Weg 27 bis zur Reibfläche 7 und somit auch bis zur Fixierung des Kupplungsmittels 4 mit dem Gehäuse 6 durch eine reibschlüssige Verbindung zwischen der Reibfläche 7 des Gehäuses 6 und dem Teilbereich 22 des Kupplungsmittels 4. Hierdurch ist es möglich, dass das Kupplungsmittel 4 bereits drehfest über die Reibfläche 7 mit dem Gehäuse 6 und somit mit dem Sitzteil verbunden ist, bevor der Kern 13 soweit gedreht hat, dass der Recliner entriegelt wird. Wird die Hülse 12 in Richtung A verschoben, verfährt sie form und/oder kraftschlüssig mit den Stegen 14 entlang der spiralförmigen Ausnehmungen 15 des Kerns 13. Hierdurch wird der Kern 13 in Richtung B gedreht. Der Bewegungswandler 11 wandelt folglich eine axiale Längsbewegung des Kupplungsmittels 4 und der Hülse 12 in eine Drehbewegung um. Da der Kern 13 in einer form- und/oder kraftschlüssige Verbindung mit der Reclinerachse 21 steht, wird auch die Reclinerachse 21 bevorzugt in Richtung B gedreht. Nach einem bestimmten Drehwinkel, den die Reclinerachse 21 durchlaufen hat, wird der Recliner entriegelt. Die Entriegelung des Recliners erfolgt allerdings bevorzugt erst dann, wenn das Kupplungsmittel 4 durch die Verschiebung in Richtung A mit den Verraststegen 10 nicht mehr in der form- und/oder kraftschlüssigen Verbindung mit den Ausnehmungen 9 des Führungselements 8 ist und bevorzugt das Kupplungsmittel 4 bereits durch seinen Teilbereich 22 in einer reibschlüssigen Verbindung mit der Reibfläche 7 des Gehäuses 6 ist. In vorteilhafter Weise ist somit das Kupplungsmittel 4 bereits drehfest mit dem Sitzteil verbunden, wenn der Recliner entriegelt und die Rückenlehne, beispielsweise in eine Schlafposition, verstellt werden kann. Wird jetzt die Rückenlehne mit entriegelten Recliner verstellt, dreht die Verkleidung 5 mit dem Führungselement 8 und den Ausnehmungen 9 um die Drehachse 20. Bei dem Übergang von einem entriegelten Recliner zu einem verriegelten Recliner wird zunächst der Bowdenzug 19 betätigt und hierdurch der Hebel 18 von dem Kupplungsmittel 4 entfernt. Der Hebel 18 drückt das Kupplungsmittel 4 dabei nicht länger in Richtung A. Durch das komprimierte erste Federmittel 16 wird dann das Kupplungsmittel 4 bevorzugt in Richtung C gedrückt. Hierdurch entfernt sich der Teilbereich 22 des Kupplungsmittels 4 von der Reibfläche 7 des Gehäuses 6. Das Kupplungsmittel 4 ist folglich nicht länger drehfest mit dem Sitzteil verbunden. Die Verraststege 10 werden dabei durch das erste Federmittel 16 gegen den Rand 24 des Führungselements 8 gedrückt. Die Verraststege 10 können dabei erst dann wieder in die Ausnehmungen 9 des Führungselements 8 einrasten, wenn sich die Verkleidung 5 mit dem Führungselement 8 wieder in der gleichen Position befindet, wie vor der Verstellung. Die Verkleidung 5 und das Führungselement 8 mit den Ausnehmungen 9 befinden sich dabei dann wieder in der gleichen Position relativ zum Kupplungsmittel 4, wenn die Rückenlehne wieder die gleiche Komfortposition eingenommen hat, wie vor der Verstellung mit entriegeltem Recliner. Ist dies der Fall, können die Verraststege 10 des Kupplungsmittels 4 in die Ausnehmungen 9 des Führungselements 8 gleiten. Hierdurch wird das Kupplungsmittel 4 durch die form- und/oder kraftschlüssige Verbindung zum Führungselement 8 und der Verkleidung 5 wieder drehfest mit der Rückenlehne verbunden. Erst wenn sich die Verraststege 10 des Kupplungsmittels 4 wieder in den Ausnehmungen 9 des Führungselements 8 befindet, kann das Kupplungsmittel 4 durch die Dekomprimierung des ersten Federmittels 16 weiter in Richtung C bewegen werden. Erst dann wird auch das zweite Federmittel 17 durch das Kupplungsmittel 4 nicht länger komprimiert und beginnt sich zu dekomprimieren. Da das zweite Federmittel 17 durch die Einkerbung 25 mit der Hülse 12 verbunden ist, wird dabei die Hülse 12 in Richtung C gedrückt. Die Hülse 12 verfährt dabei mit den Stegen 14 form- und/oder kraftschlüssig entlang der spiralförmigen Ausnehmungen 15 des Kerns 13, wobei der Kern 13 entgegengesetzt zur Richtung B gedreht wird. Durch die form- und/oder kraftschlüssige Verbindung zwischen Kern 13 und Reclinerachse 21 wird auch die Reclinerachse 21 entgegengesetzt zur Richtung B gedreht. Bevorzugt verriegelt der Recliner erst dann, wenn die Hülse 12 mit den Stegen 14 wieder in der Position auf dem Kern 13 ist, wie vor der Entriegelung des Recliners. Folglich verriegelt der Recliner erst ab einem bestimmten Drehwinkel den die Reclinerachse 21 durchlaufen haben muss. Zusammenfassend weist der Fahrzeugsitz durch die Verstellvorrichtung 1 eine Memory-Funktion auf, da eine eingestellte Komfortverstellung der Rückenlehne, die mit einem verriegelten Recliner erfolgt ist, durch das Kupplungsmittel 4 fixiert wird. Die Fixierung der Position für die Komfortstellung wird dadurch erreicht, dass das Kupplungsmittel 4 drehfest mit dem Sitzteil verbunden ist, wenn die Rückenlehne mit entriegelten Recliner verschwenkt wird und der Recliner erst dann wieder verriegeln kann, wenn die Rückenlehne im wesentlichen in der gleichen Komfortstellung ist, wie vor der Verstellung, da sich nur dann das Kupplungsmittel 4 in Richtung C verschieben lässt und die Reclinerachse zur Verriegelung gedreht werden kann.

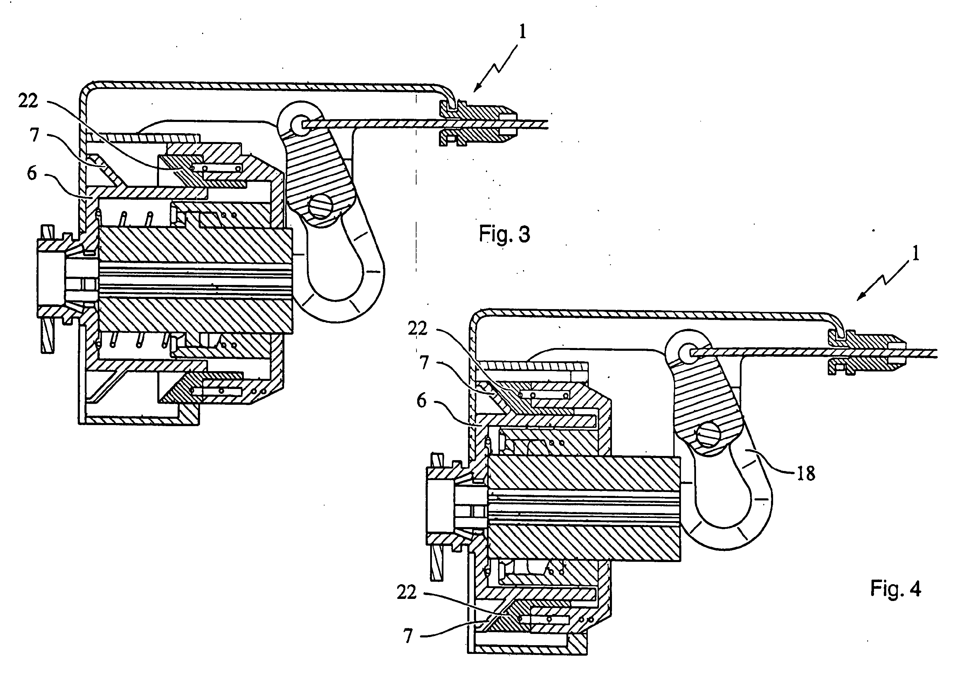

Die Figur 3 zeigt schematisch die Verstellvorrichtung 1, wobei das Kupplungsmittel 4 mit seinem Teilbereich 22 nicht in einer reibschlüssigen Verbindung zur Reibfläche 7 des Gehäuses 6 steht. Folglich ist der Recliner verriegelt. Eine Drehung der Rückenlehne ist nur im sogenannten Komfortbereich möglich, wobei sich hierbei das Kupplungsmittel 4 mitdreht.

In der Figur 4 ist schematisch dargestellt, dass der Teilbereich 22 des Kupplungsmittels 4 eine reibschlüssige Verbindung mit der Reibfläche 7 des Gehäuses 6 eingegangen ist. In diesem Fall ist der Recliner entriegelt. Bei einer Drehung der Rückenlehne würde sich das Kupplungsmittel 4 nicht mit der Rückenlehne drehen.

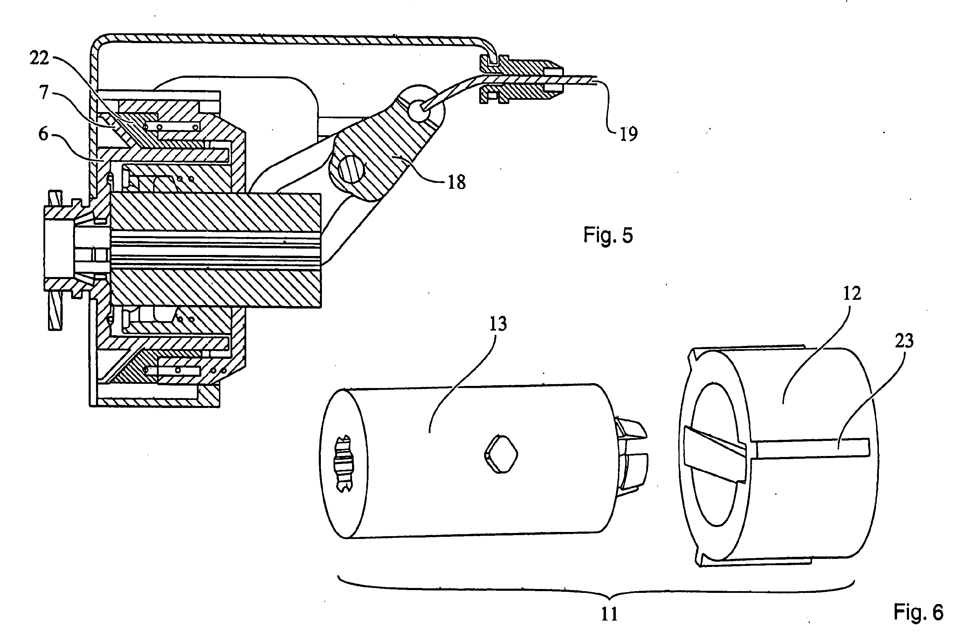

In der Figur 5 ist schematisch dargestellt, dass die Reibfläche 7 des Gehäuses 6 und der Teilbereich 22 des Kupplungsmittels 4 eine reibschlüssige Verbindung eingegangen sind, wobei der Hebel 18 weiter ausgelenkt ist, als in der Figur 4.

In der Figur 6 ist schematisch der Bewegungswandler 11 dargestellt. In diesem Ausführungsbeispiel fehlen jedoch die spiralförmigen Ausnehmungen 15 auf dem Kern 13 des Bewegungswandlers 11. Die Reclinerachse 21 wird in der Mitte des Kerns 13 eingeführt und geht mit dem Kern 13 eine form- und/oder kraftschlüssige Verbindung ein.

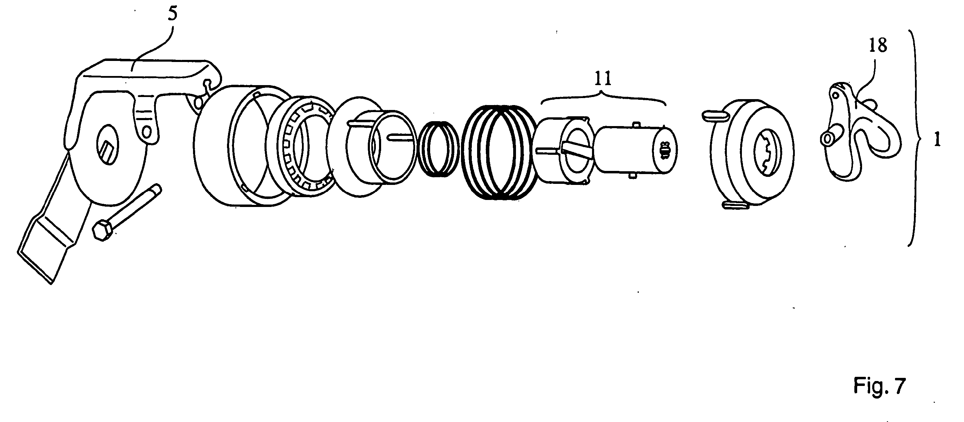

In der Figur 7 ist die Verstellvorrichtung 1 in einer Explosionsdarstellung dargestellt, wobei die Reclinerachse 21 nicht mit dargestellt ist.

### Ausführungsformen

1. Verstellvorrichtung 1 für ein Fahrzeug mit einem Kupplungsmittel (4) und einer Reclinerachse 21, wobei die Reclinerachse 21 mit einem Recliner verbunden ist, dadurch gekennzeichnet, dass bei einer Bewegung des Kupplungsmittels (4) in axialer Richtung die Reclinerachse 21 um eine Drehachse 20 dreht und hierdurch der Recliner entriegelt oder verriegelt.
2. Verstellvorrichtung 1 nach Ausführungsform 1, dadurch gekennzeichnet, dass die Verstellvorrichtung 1 einen Bewegungswandler 11 aufweist, wobei der Bewegungswandler 11 eine Hülse 12 mit Stegen 14 und einen Kern 13 mit spiralförmigen Ausnehmungen 15 aufweist und der Kern 13 mit der Reclinerachse 21 verbunden ist.
3. Verstellvorrichtung 1 nach einer der vorhergehenden Ausführungsformen, dadurch gekennzeichnet, dass bei einer axialen Verschiebung des Kupplungsmittels 4 die Hülse 12 auf dem Kern 13 verfährt, wodurch der Kern 13 dreht und den Recliner entriegelt.
4. Verstellvorrichtung 1 nach einer der vorhergehenden Ausführungsformen, dadurch gekennzeichnet, dass die Verstellvorrichtung 1 ein Gehäuse 6 aufweist, wobei das Gehäuse 6 mindestens eine Reibfläche 7 aufweist und das Kupplungsmittel 4 nach der axialen Verschiebung eine reibschlüssige Verbindung mit der Reibfläche 7 eingeht und drehgesichert ist.
5. Verstellvorrichtung 1 nach einer der vorhergehenden Ausführungsformen, dadurch gekennzeichnet, dass das Gehäuse 6 drehfest mit einem Sitzteil des Fahrzeugsitzes verbunden ist.
6. Verstellvorrichtung 1 nach einer der vorhergehenden Ausführungsformen, dadurch gekennzeichnet, dass sich die Hülse 12 vor einer axialen Verschiebung des Kupplungsmittels 4 in Richtung (A) oder nach einer axialen Verschiebung in Richtung (C) nur teilweise in dem Gehäuse 6 befindet.
7. Verstellvorrichtung 1 nach einer der vorhergehenden Ausführungsformen, dadurch gekennzeichnet, dass die Verstellvorrichtung 1 eine Verkleidung 5 aufweist, wobei die Verkleidung 5 drehfest mit einer Rückenlehne des Fahrzeugsitzes verbunden ist, wobei die Rückenlehne um die Drehachse 20 drehbar ist.
8. Verstellvorrichtung 1 nach einer der vorhergehenden Ausführungsformen, dadurch gekennzeichnet, dass die Verkleidung 5 ein Führungselement 8 mit Ausnehmungen 9 aufweist und das Kupplungsmittel 4 Verraststege 10 aufweist.
9. Verstellvorrichtung 1 nach einer der vorhergehenden Ausführungsformen, dadurch gekennzeichnet, dass eine form- und/oder kraftschlüssige Verbindung zwischen Kupplungsmittel 4 und Verkleidung 5 entsteht, wenn sich die Verraststege 10 in den Ausnehmungen 9 befinden.
10. Verstellvorrichtung 1 nach einer der vorhergehenden Ausführungsformen, dadurch gekennzeichnet, dass sich nach einer axialen Verschiebung in Richtung (A) die Verraststege 10 des Kupplungsmittels 4 nicht in den Ausnehmungen 9 befinden und vor der axialen Verschiebung in Richtung (A) oder nach der axialen Verschiebung in Richtung (C) sich die Verraststege 10 zu mindest teilweise in den Ausnehmungen 9 des Führungselements 8 befinden.
11. Verstellvorrichtung 1 nach einer der vorhergehenden Ausführungsformen, dadurch gekennzeichnet, dass das Kupplungsmittel 4 ein erstes Federmittel 16 aufweist.
12. Verstellvorrichtung 1 nach einer der vorhergehenden Ausführungsformen, dadurch gekennzeichnet, dass der Bewegungswandler 11 ein zweites Federmittel 17 aufweist.
13. Verstellvorrichtung 1 nach einer der vorhergehenden Ausführungsformen, dadurch gekennzeichnet, dass das Kupplungsmittel 4 eine reibschlüssige Verbindung mit der Reibfläche 7 eingeht, bevor der Kern 13 durch seine Drehbewegung den Recliner entriegelt.
14. Verstellvorrichtung 1 nach einer der vorhergehenden Ausführungsformen, dadurch gekennzeichnet, dass der Recliner so lange entriegelt bleibt, bis das Kupplungsmittel 4 wieder eine form- und/oder kraftschlüssige Verbindung mit der Verkleidung 5 eingegangen ist.
15. Verfahren zur Entriegelung eines Recliners mit einer Verstellvorrichtung 1 nach einer der vorhergehenden Ausführungsformen, wobei durch einen Zug 19 ein Hebel 18 gegen das Kupplungsmittel 4 gedrückt wird, wobei das Kupplungsmittel 4 axial verschoben wird, dadurch gekennzeichnet, dass das erste Federmittel 16 komprimiert wird und die Verraststege 10 aus den Ausnehmungen 9 entfernt werden, wodurch die form- und/oder kraftschlüssige Verbindung mit der Verkleidung 5 und somit mit der Rückenlehne gelöst wird, wobei durch die Bewegung des Kupplungsmittels 4 auch die Hülse 12 verschoben wird, wobei das zweite Federmittel 17 komprimiert wird und das Kupplungsmittel 4 eine reibschlüssige Verbindung mit der konischen Reibfläche 7 des Gehäuses 6 eingeht und der Kern 13 in Richtung (B) um die Drehachse 20 dreht und die Reclinerachse 21 mitdreht, wodurch der Recliner entriegelt wird, wobei im Fall eines entriegelten Recliners durch die reibschlüssige Verbindung des Kupplungsmittels 4 mit dem Gehäuse 6 eine Memoryfunktion entsteht.
16. Verfahren zur Verriegelung eines Recliners durch eine Verstellvorrichtung 1 nach einer der vorhergehenden Ausführungsformen, dadurch gekennzeichnet, dass das Kupplungsmittel 4 durch das komprimierte erste Federmittel 16 in Richtung (C) gedrückt wird und die reibschlüssige Verbindung mit dem Gehäuse 6 gelöst wird, wobei auch das zweite Federmittel 17 dekomprimiert wird und die Hülse 12 auf dem Kern 13 geschoben wird, wobei der Kern 13 hierdurch entgegengesetzt der Richtung (B) gedreht wird und dabei auch die Reclinerachse 21 entgegengesetzt der Richtung (B) gedreht wird, wobei das Kupplungsmittel 4 mit den Verraststegen 10 in die Ausnehmungen 9 des Führungselements 8 geführt wird, wenn die ursprüngliche Position des Kupplungsmittels 4 bezogen auf das Führungselement 8 erreicht wird und wenn der Zug 19 nicht länger gezogen wird, wodurch das Kupplungsmittel 4 mit der Verkleidung 5 eine form- und/oder kraftschlüssige Verbindung eingeht, bevor der Recliner verriegelt wird.

## Patentansprüche

1. Verstellvorrichtung (1) für ein Fahrzeug mit einem Kupplungsmittel (4) und einer Reclinerachse (21), wobei die Reclinerachse (21) mit einem Recliner verbunden ist, **dadurch gekennzeichnet, dass** bei einer Bewegung des Kupplungsmittels (4) in axialer Richtung die Reclinerachse (21) um eine Drehachse (20) dreht und hierdurch der Recliner entriegelt oder verriegelt.

2. Verstellvorrichtung (1) nach Anspruch 1, **dadurch gekennzeichnet, dass** die Verstellvorrichtung (1) einen Bewegungswandler (11) aufweist, wobei der Bewegungswandler (11) eine Hülse (12) mit Stegen (14) und einen Kern (13) mit spiralförmigen Ausnehmungen (15) aufweist und der Kern (13) mit der Reclinerachse (21) verbunden ist.

3. Verstellvorrichtung (1) nach einem der vorhergehenden Ansprüche, **dadurch gekennzeichnet, dass** bei einer axialen Verschiebung des Kupplungsmittels (4) die Hülse (12) auf dem Kern (13) verfährt, wodurch der Kern (13) dreht und den Recliner entriegelt.

4. Verstellvorrichtung (1) nach einem der vorhergehenden Ansprüche, **dadurch gekennzeichnet, dass** die Verstellvorrichtung (1) ein Gehäuse (6) aufweist, wobei das Gehäuse (6) mindestens eine Reibfläche (7) aufweist und das Kupplungsmittel (4) nach der axialen Verschiebung eine reibschlüssige Verbindung mit der Reibfläche (7) eingeht und drehgesichert ist.

5. Verstellvorrichtung (1) nach einem der vorhergehenden Ansprüche, **dadurch gekennzeichnet, dass** sich die Hülse (12) vor einer axialen Verschiebung des Kupplungsmittels (4) in Richtung (A) oder nach einer axialen Verschiebung in Richtung (C) nur teilweise in dem Gehäuse (6) befindet.

6. Verstellvorrichtung (1) nach einem der vorhergehenden Ansprüche, **dadurch gekennzeichnet, dass** die Verstellvorrichtung (1) eine Verkleidung (5) aufweist, wobei die Verkleidung (5) drehfest mit einer Rückenlehne des Fahrzeugsitzes verbunden ist, wobei die Rückenlehne um die Drehachse (20) drehbar ist.

7. Verstellvorrichtung (1) nach einem der vorhergehenden Ansprüche, **dadurch gekennzeichnet, dass** die Verkleidung (5) ein Führungselement (8) mit Ausnehmungen (9) aufweist und das Kupplungsmittel (4) Verraststege (10) aufweist.

8. Verstellvorrichtung (1) nach einem der vorhergehenden Ansprüche, **dadurch gekennzeichnet, dass** eine form- und/oder kraftschlüssige Verbindung zwischen Kupplungsmittel (4) und Verkleidung (5) entsteht, wenn sich die Verraststege (10) in den Ausnehmungen (9) befinden.

9. Verstellvorrichtung (1) nach einem der vorhergehenden Ansprüche, **dadurch gekennzeichnet, dass** sich nach einer axialen Verschiebung in Richtung (A) die Verraststege (10) des Kupplungsmittels (4) nicht in den Ausnehmungen (9) befinden und vor der axialen Verschiebung in Richtung (A) oder nach der axialen Verschiebung in Richtung (C) sich die Verraststege (10) zu mindest teilweise in den Ausnehmungen (9) des Führungselements (8) befinden.

10. Verstellvorrichtung (1) nach einem der vorhergehenden Ansprüche, **dadurch gekennzeichnet, dass** das Kupplungsmittel (4) ein erstes Federmittel (16) aufweist.

11. Verstellvorrichtung (1) nach einem der vorhergehenden Ansprüche, **dadurch gekennzeichnet, dass** der Bewegungswandler (11) ein zweites Federmittel (17) aufweist.

12. Verstellvorrichtung (1) nach einem der vorhergehenden Ansprüche, **dadurch gekennzeichnet, dass** das Kupplungsmittel (4) eine reibschlüssige Verbindung mit der Reibfläche (7) eingeht, bevor der Kern (13) durch seine Drehbewegung den Recliner entriegelt.

13. Verstellvorrichtung (1) nach einem der vorhergehenden Ansprüche, **dadurch gekennzeichnet, dass** der Recliner so lange entriegelt bleibt, bis das Kupplungsmittel (4) wieder eine form- und/oder kraftschlüssige Verbindung mit der Verkleidung (5) eingegangen ist.

14. Verfahren zur Entriegelung eines Recliners mit einer Verstellvorrichtung (1) nach einem der vorhergehenden Ansprüche, wobei durch einen Zug (19) ein Hebel (18) gegen das Kupplungsmittel (4) gedrückt wird, wobei das Kupplungsmittel (4) axial verschoben wird, **dadurch gekennzeichnet, dass** das erste Federmittel (16) komprimiert wird und die Verraststege (10) aus den Ausnehmungen (9) entfernt werden, wodurch die form- und/oder kraftschlüssige Verbindung mit der Verkleidung (5) und somit mit der Rückenlehne gelöst wird, wobei durch die Bewegung des Kupplungsmittels (4) auch die Hülse (12) verschoben wird, wobei das zweite Federmittel (17) komprimiert wird und das Kupplungsmittel (4) eine reibschlüssige Verbindung mit der konischen Reibfläche (7) des Gehäuses (6) eingeht und der Kern (13) in Richtung (B) um die Drehachse (20) dreht und die Reclinerachse (21) mitdreht, wodurch der Recliner entriegelt wird, wobei im Fall eines entriegelten Recliners durch die reibschlüssige Verbindung des Kupplungsmittels (4) mit dem Gehäuse (6) eine Memoryfunktion entsteht.

15. Verfahren zur Verriegelung eines Recliners durch eine Verstellvorrichtung (1) nach einem der Ansprüche 1-13, **dadurch gekennzeichnet, dass** das Kupplungsmittel (4) durch das komprimierte erste Federmittel (16) in Richtung (C) gedrückt wird und die reibschlüssige Verbindung mit dem Gehäuse (6) gelöst wird, wobei auch das zweite Federmittel (17) dekomprimiert wird und die Hülse (12) auf dem Kern (13) geschoben wird, wobei der Kern (13) hierdurch entgegengesetzt der Richtung (B) gedreht wird und dabei auch die Reclinerachse (21) entgegengesetzt der Richtung (B) gedreht wird, wobei das Kupplungsmittel (4) mit den Verraststegen (10) in die Ausnehmungen (9) des Führungselements (8) geführt wird, wenn die ursprüngliche Position des Kupplungsmittels (4) bezogen auf das Führungselement (8) erreicht wird und wenn der Zug (19) nicht länger gezogen wird, wodurch das Kupplungsmittel (4) mit der Verkleidung (5) eine form- und/oder kraftschlüssige Verbindung eingeht, bevor der Recliner verriegelt wird.

## Claims

1. Adjusting apparatus (1) for a vehicle having a coupling means (4) and a recliner shaft (21), the recliner shaft (21) being connected to a recliner, **characterized in that** when the coupling means (4) is moved in the axial direction, the recliner shaft (21) rotates about a rotational axis (20) and the recliner is unlocked or locked as a result.

2. Adjusting apparatus (1) according to Claim 1, **characterized in that** the adjusting apparatus (1) has a motion converter (11), the motion converter (11) comprising a sleeve (12) with projections (14) and a core (13) with spiral-shaped recesses (15), and the core (13) being connected to the recliner shaft (21).

3. Adjusting apparatus (1) according to one of the preceding claims, **characterized in that** with an axial displacement of the coupling means (4) the sleeve (12) moves on the core (13), as a result of which the core (13) rotates and unlocks the recliner.

4. Adjusting apparatus (1) according to one of the preceding claims, **characterized in that** the adjusting apparatus (1) has a housing (6), the housing (6) comprising at least one friction surface (7) and the coupling means (4) creating a frictional connection with the friction surface (7) and being secured against rotation, after the axial displacement.

5. Adjusting apparatus (1) according to one of the preceding claims, **characterized in that** the sleeve (12) is only partially located in the housing (6), before an axial displacement of the coupling means (4) in the direction (A) or after an axial displacement in the direction (C).

6. Adjusting apparatus (1) according to one of the preceding claims, **characterized in that** the adjusting apparatus (1) has a cover (5), the cover (5) being connected fixedly in terms of rotation to a backrest of the vehicle seat, the backrest being able to be rotated about the rotational axis (20).

7. Adjusting apparatus (1) according to one of the preceding claims, **characterized in that** the cover (5) has a guide element (8) with recesses (9) and the coupling means (4) has latching projections (10).

8. Adjusting apparatus (1) according to one of the preceding claims, **characterized in that** a positive and/or non-positive connection is created between the coupling means (4) and cover (5), when the latching projections (10) are located in the recesses (9).

9. Adjusting apparatus (1) according to one of the preceding claims, **characterized in that** after an axial displacement in the direction (A), the latching projections (10) of the coupling means (4) are not in the recesses (9) and, before the axial displacement in the direction (A) or after the axial displacement in the direction (C), the latching projections (10) are located at least partially in the recesses (9) of the guide element (8).

10. Adjusting apparatus (1) according to one of the preceding claims, **characterized in that** the coupling means (4) has a first spring means (16).

11. Adjusting apparatus (1) according to one of the preceding claims, **characterized in that** the motion converter (11) has a second spring means (17).

12. Adjusting apparatus (1) according to one of the preceding claims, **characterized in that** the coupling means (4) produces a frictional connection with the friction surface (7), before the core (13) unlocks the recliner by its rotational movement.

13. Adjusting apparatus (1) according to one of the preceding claims, **characterized in that** the recliner remains unlocked until the coupling means (4) again creates a positive and/or non-positive connection with the cover (5).

14. Method for unlocking a recliner comprising an adjusting apparatus (1) according to one of the preceding claims, a lever (18) being forced against the coupling means (4) by means of a cable pull (19), the coupling means (4) being axially displaced, **characterized in that** the first spring means (16) is compressed and the latching projections (10) are disconnected from the recesses (9), whereby the positive and/or non-positive connection to the cover (5) and thus to the backrest is released, the sleeve (12) also being displaced by means of the movement of the coupling means (4), the second spring means (17) being compressed and the coupling means (4) creating a frictional connection with the conical friction surface (7) of the housing (6) and the core (13) rotating in the direction (B) about the rotational axis (20) and the recliner shaft (21) rotating therewith, whereby the recliner is unlocked, and in the case of an unlocked recliner a memory function being produced by the frictional connection of the coupling means (4) with the housing (6).

15. Method for locking a recliner by an adjusting apparatus (1) according to one of Claims 1-13, **characterized in that** the coupling means (4) is forced by the compressed first spring means (16) in the direction (C), and the frictional connection with the housing (6) is released, the second spring means (17) being also decompressed and the sleeve (12) being pushed on the core (13), the core (13) as a result being rotated counter to the direction (B) and thus also the recliner shaft (21) being rotated counter to the direction (B), the coupling means (4) being guided with the latching projections (10) in the recesses (9) of the guide element (8), when the original position of the coupling means (4) relative to the guide element (8) is reached, and when the cable pull (19) is no longer pulled, whereby the coupling means (4) creates with the cover (5) a positive and/or non-positive connection, before the recliner is locked.

## Revendications

1. Dispositif de réglage (1) pour un véhicule avec un moyen de couplage (4) et un axe de fauteuil inclinable (21), dans lequel l'axe de fauteuil inclinable (21) est assemblé à un fauteuil inclinable, **caractérisé en ce que**, lors d'un mouvement du moyen de couplage (4) en direction axiale, l'axe de fauteuil inclinable (21) tourne autour d'un axe de rotation (20) et déverrouille ou verrouille ainsi le fauteuil inclinable.

2. Dispositif de réglage (1) selon la revendication 1, **caractérisé en ce que** le dispositif de réglage (1) présente un convertisseur de mouvement (11), dans lequel le convertisseur de mouvement (11) présente une douille (12) avec des nervures (14) et un noyau (13) avec des évidements hélicoïdaux (15) et le noyau (13) est assemblé à l'axe de fauteuil inclinable (21).

3. Dispositif de réglage (1) selon l'une quelconque des revendications précédentes, **caractérisé en ce que**, lors d'un déplacement axial du moyen de couplage (4), la douille (12) se déplace sur le noyau (13), ce qui fait tourner le noyau (13) et déverrouille le fauteuil inclinable.

4. Dispositif de réglage (1) selon l'une quelconque des revendications précédentes, **caractérisé en ce que** le dispositif de réglage (1) présente un boîtier (6), dans lequel le boîtier (6) présente au moins une face de friction (7) et le moyen de couplage (4) forme, après le déplacement axial, un assemblage à friction avec la face de friction (7) et est bloqué en rotation.

5. Dispositif de réglage (1) selon l'une quelconque des revendications précédentes, **caractérisé en ce que** la douille (12) ne se trouve que partiellement dans le boîtier (6) avant un déplacement axial du moyen de couplage (4) dans la direction (A) ou après un déplacement axial dans la direction (C).

6. Dispositif de réglage (1) selon l'une quelconque des revendications précédentes, **caractérisé en ce que** le dispositif de réglage (1) présente un habillage (5), dans lequel l'habillage (5) est solidaire en rotation d'un dossier du siège de véhicule, dans lequel le dossier peut tourner autour de l'axe de rotation (20).

7. Dispositif de réglage (1) selon l'une quelconque des revendications précédentes, **caractérisé en ce que** l'habillage (5) présente un élément de guidage (8) avec des évidements (9) et le moyen de couplage (4) présente des nervures d'encliquetage (10).

8. Dispositif de réglage (1) selon l'une quelconque des revendications précédentes, **caractérisé en ce qu'**il se forme un assemblage par emboîtement et/ou par force entre le moyen de couplage (4) et l'habillage (5), lorsque les nervures d'encliquetage (10) se trouvent dans les évidements (9).

9. Dispositif de réglage (1) selon l'une quelconque des revendications précédentes, **caractérisé en ce que**, après un déplacement axial dans la direction (A), les nervures d'encliquetage (10) du moyen de couplage (4) ne se trouvent pas dans les évidements (9) et, avant le déplacement axial dans la direction (A) ou après le déplacement axial dans la direction (C), les nervures d'encliquetage (10) se trouvent au moins partiellement dans les évidements (9) de l'élément de guidage (8).

10. Dispositif de réglage (1) selon l'une quelconque des revendications précédentes, **caractérisé en ce que** le moyen de couplage (4) présente un premier moyen de ressort (16).

11. Dispositif de réglage (1) selon l'une quelconque des revendications précédentes, **caractérisé en ce que** le convertisseur de mouvement (11) présente un deuxième moyen de ressort (17).

12. Dispositif de réglage (1) selon l'une quelconque des revendications précédentes, **caractérisé en ce que** le moyen de couplage (4) forme un assemblage à friction avec la face de friction (7), avant que le noyau (13) déverrouille le fauteuil inclinable par son mouvement de rotation.

13. Dispositif de réglage (1) selon l'une quelconque des revendications précédentes, **caractérisé en ce que** le fauteuil inclinable reste déverrouillé aussi longtemps que le moyen de couplage (4) forme de nouveau un assemblage par emboîtement et/ou par force avec l'habillage (5).

14. Procédé de déverrouillage d'un fauteuil inclinable avec un dispositif de réglage (1) selon l'une quelconque des revendications précédentes, dans lequel on pousse un levier (18) contre le moyen de couplage (4) par une traction (19), et dans lequel on déplace axialement le moyen de couplage (4), **caractérisé en ce que** l'on comprime le premier moyen de ressort (16) et on retire les nervures d'encliquetage (10) hors des évidements (9), libérant ainsi l'assemblage par emboîtement et/ou par force avec l'habillage (5) et dès lors avec le dossier, dans lequel on déplace aussi la douille (12) par le mouvement du moyen de couplage (4), dans lequel on comprime le deuxième moyen de ressort (17) et le moyen de couplage (4) forme un assemblage à friction avec la face de friction conique (7) du boîtier (6) et le noyau (13) tourne dans la direction (B) autour de l'axe de rotation (20) et l'axe de fauteuil inclinable (21) tourne également, déverrouillant ainsi le fauteuil inclinable, dans lequel, dans le cas d'un fauteuil inclinable déverrouillé, il apparaît une fonction de mémorisation par l'assemblage à friction du moyen de couplage (4) avec le boîtier (6).

15. Procédé de verrouillage d'un fauteuil inclinable au moyen d'un dispositif de réglage (1) selon l'une quelconque des revendications 1 à 13, **caractérisé en ce que** l'on pousse le moyen de couplage (4) dans la direction (C) au moyen du premier moyen de ressort comprimé (16) et on libère l'assemblage à friction avec le boîtier (6), dans lequel on décomprime également le deuxième moyen de ressort (17) et on déplace la douille (12) sur le noyau (13), dans lequel on fait ainsi tourner le noyau (13) à l'opposé de la direction (B) et on fait en l'occurrence aussi tourner l'axe de fauteuil inclinable (21) à l'opposé de la direction (B), dans lequel on guide le moyen de couplage (4) avec les nervures d'encliquetage (10) dans les évidements (9) de l'élément de guidage (8), lorsque la position initiale du moyen de couplage (4) par rapport à l'élément de guidage (8) est atteinte et lorsque la traction (19) n'est plus exercée, le moyen de couplage (4) formant ainsi avec l'habillage (5) un assemblage par emboîtement et/ou par force avant que le fauteuil inclinable soit verrouillé.
